(19) Europäisches Patentamt / European Patent Office / Office européen des brevets

(11) **EP 3 631 158 B1**

(12) **EUROPEAN PATENT SPECIFICATION**

(45) Date of publication and mention of the grant of the patent:
**11.03.2026 Bulletin 2026/11**

(21) Application number: **18806662.5**

(22) Date of filing: **22.05.2018**

(51) International Patent Classification (IPC):
**G06F 18/232** (2023.01)    **G01V 1/50** (2006.01)

(52) Cooperative Patent Classification (CPC):
**G01V 1/50; G06F 18/232;** G01V 2210/6161;
G01V 2210/6163; G01V 2210/6167;
G01V 2210/6169; G01V 2210/624

(86) International application number:
**PCT/US2018/033772**

(87) International publication number:
**WO 2018/217679 (29.11.2018 Gazette 2018/48)**

(54) **WELL-LOG INTERPRETATION USING CLUSTERING**

BOHRLOCHMESSUNGSINTERPRETATION UNTER VERWENDUNG VON CLUSTERING

INTERPRÉTATION DE DIAGRAPHIE DE PUITS À L'AIDE D'UNE MISE EN GRAPPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2017 US 201762509416 P**

(43) Date of publication of application:
**08.04.2020 Bulletin 2020/15**

(73) Proprietors:
• **Services Pétroliers Schlumberger**
  **75007 Paris (FR)**
  Designated Contracting States:
  **FR**
• **Geoquest Systems B.V.**
  **2586 BJ The Hague (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **AMIDI, Shervine**
  **34006 Montpellier (FR)**
• **BRUNED, Vianney**
  **34006 Montpellier (FR)**
• **WLODARCZYK, Sylvain**
  **34006 Montpellier (FR)**

(74) Representative: **Schlumberger Intellectual Property Department**
**Parkstraat 83**
**2514 JG Den Haag (NL)**

(56) References cited:
EP-A- 2 113 796    US-A1- 2008 162 098
US-A1- 2013 096 835    US-A1- 2013 144 532
US-A1- 2014 098 635

## Description

### Background

Exploration and production (E&P) of hydrocarbons in a field, such as an oil field, may be analyzed and modeled based on characteristics of a reservoir, such as porosity and permeability. A "facies" refers to a body of rock with specified characteristics reflecting how the rock was formed. For example, a facies may be determined based on the appearance and other characteristics of a sedimentary deposit that are distinguished from contiguous deposits. The description of appearance and other visible characteristics is referred to as the lithology of the rock, such as color, texture, grain size, or composition of the rock. Different lithologies in the field may correspond to variations of reservoir characteristics.

Well logs such as gamma ray, sonic, or bulk density logs may be analyzed to determine intervals of similar log measurements referred to as electrofacies that are related to the facies and lithologies surrounding the wells. Generally, the electrofacies are determined by referring to individual logs depicting individual parameters by a human interpreter looking for parameter changes that indicate changes in rock properties. This can lead to inconsistent well-log interpretation when multiple logs are available. Further, such a manual process can be time-consuming and subjective.

Clustering has been used in various applications; however, in well-log interpretation, the data set may be quite large, on the order of tens of thousands of points, or more. The size of the data set being analyzed may result in runtimes for clustering processes being impractically long, sometimes weeks or more.

US2008/162098 describes a method for identifying regions in the ground at a well site. Continuous data is received from the well site and redundancies in the continuous data and removed to form processed data. Cluster analysis is performed using the processed data to form a set of cluster units, wherein the set of cluster units include different types of cluster units that identify differences between regions in the ground at the well site. Properties are identified for each type of cluster unit in the set of cluster units to form a model for the well site.

### Summary

The present invention resides in a method of interpreting well log data as defined in claim 1. Preferred embodiments are defined in claims 2 to 9. The present invention further resides in a computing system as defined in claim 10 and in a non-transitory computer-readable medium as defined in claim 11.

The computing systems and methods disclosed herein are more effective methods for processing collected data that may, for example, correspond to a surface and a subsurface region. These computing systems and methods increase data processing effectiveness, efficiency, and accuracy. Such methods and computing systems may complement or replace conventional methods for processing collected data

### Brief Description of the Drawings

The accompanying drawings, which are incorporated in and constitute a part of this specification, illustrate embodiments of the present teachings and together with the description, serve to explain the principles of the present teachings. In the figures:

Figures 1A, 1B, 1C, 1D, 2, and 3 illustrate simplified, schematic views of an oilfield and its operation, according to an embodiment.

Figures 4 illustrates a flowchart of a method for well-log interpretation, according to an embodiment.

Figures 5A and 5B illustrate another flowchart of a method for well-log interpretation, according to an embodiment.

Figure 6 illustrates an example of two well logs, according to an embodiment.

Figure 7 illustrates a well-log data set in the parameter domain as groups (segments) of points are simplified into representative points, according to an embodiment.

Figure 8 illustrates the well-log data set in the parameter domain as the groups of points, which are simplified into representative points are approximated by ellipsoids, according to an embodiment.

Figures 9A, 9B, and 9C illustrate three techniques for finding the distance in the parameter domain between the segments simplified into the representative points, according to an embodiment.

Figure 10 illustrates a plot of reachability distance, according to an embodiment.

Figure 11 illustrates a portion of the plot of reachability distance, showing a cluster-initialization point at a local minimum thereof, according to an embodiment.

Figure 12 illustrates a portion of the plot of reachability distance, showing a range of cluster-initialization points near the local minimum thereof, according to an embodiment.

Figure 13 illustrates a conceptual view of the well-log data in the parameter domain following the method of Figures 5A and 5B, according to an embodiment.

Figures 14A, 14B, and 14C illustrate a flowchart of a method, according to an embodiment.

Figure 15 illustrates a schematic view of a computing system, according to an embodiment.

**Description of Embodiments**

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object could be termed a second object, and, similarly, a second object could be termed a first object, without departing from the scope of the invention. The first object and the second object are both objects, respectively, but they are not to be considered the same object.

The terminology used in the description of the invention herein is for the purpose of describing particular embodiments only and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques and workflows that are in accordance with some embodiments. Some operations in the processing procedures, methods, techniques and workflows disclosed herein may be combined and/or the order of some operations may be changed.

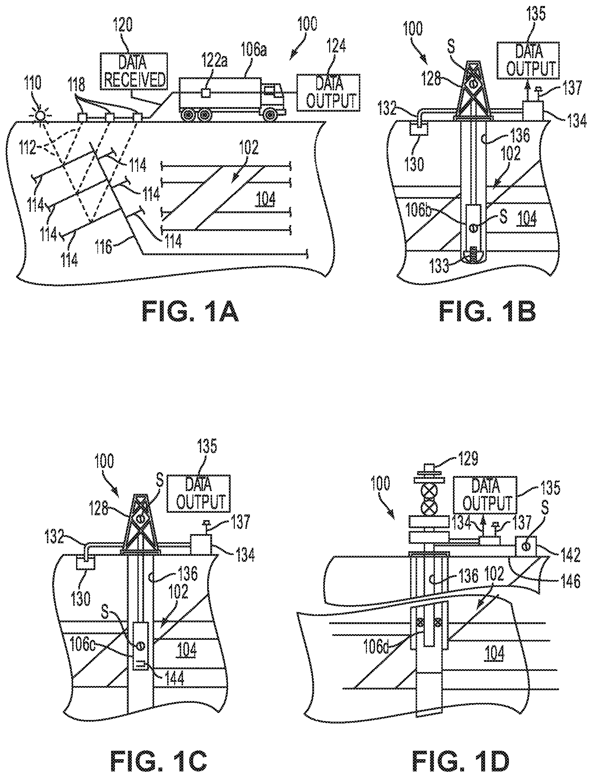

Figures 1A-1D illustrate simplified, schematic views of oilfield 100 having subterranean formation 102 containing reservoir 104 therein in accordance with implementations of various technologies and techniques described herein. Figure 1A illustrates a survey operation being performed by a survey tool, such as seismic truck 106.1, to measure properties of the subterranean formation. The survey operation is a seismic survey operation for producing sound vibrations. In Figure 1A, one such sound vibration, e.g., sound vibration 112 generated by source 110, reflects off horizons 114 in earth formation 116. A set of sound vibrations is received by sensors, such as geophone-receivers 118, situated on the earth's surface. The data received 120 is provided as input data to a computer 122.1 of a seismic truck 106.1, and responsive to the input data, computer 122.1 generates seismic data output 124. This seismic data output may be stored, transmitted or further processed as desired, for example, by data reduction.

Figure 1B illustrates a drilling operation being performed by drilling tools 106.2 suspended by rig 128 and advanced into subterranean formations 102 to form wellbore 136. Mud pit 130 is used to draw drilling mud into the drilling tools via flow line 132 for circulating drilling mud down through the drilling tools, then up wellbore 136 and back to the surface. The drilling mud is typically filtered and returned to the mud pit. A circulating system may be used for storing, controlling, or filtering the flowing drilling mud. The drilling tools are advanced into subterranean formations 102 to reach reservoir 104. Each well may target one or more reservoirs. The drilling tools are adapted for measuring downhole properties using logging while drilling tools. The logging while drilling tools may also be adapted for taking core sample 133 as shown.

Computer facilities may be positioned at various locations about the oilfield 100 (e.g., the surface unit 134) and/or at remote locations. Surface unit 134 may be used to communicate with the drilling tools and/or offsite operations, as well as with other surface or downhole sensors. Surface unit 134 is capable of communicating with the drilling tools to send commands to the drilling tools, and to receive data therefrom. Surface unit 134 may also collect data generated during the drilling operation and produce data output 135, which may then be stored or transmitted.

Sensors (S), such as gauges, may be positioned about oilfield 100 to collect data relating to various oilfield operations as described previously. As shown, sensor (S) is positioned in one or more locations in the drilling tools and/or at rig 128 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 106.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 134. The bottom hole assembly further includes drill collars for performing various other measurement functions.

The bottom hole assembly may include a communication subassembly that communicates with surface unit 134. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

Typically, the wellbore is drilled according to a drilling plan that is established prior to drilling. The drilling plan typically sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by surface unit 134 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 134 may include transceiver 137 to allow communications between surface unit 134 and various portions of the oilfield 100 or other locations. Surface unit 134 may also be provided with or functionally connected to one or more controllers (not shown) for actuating mechanisms at oilfield 100. Surface unit 134 may then send command signals to oilfield 100 in response to data received. Surface unit 134 may receive commands via transceiver 137 or may itself execute commands to the controller. A processor may be provided to analyze the data (locally or remotely), make the decisions and/or actuate the controller. In this manner, oilfield 100 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

Figure 1C illustrates a wireline operation being performed by wireline tool 106.3 suspended by rig 128 and into wellbore 136 of Figure 1B. Wireline tool 106.3 is adapted for deployment into wellbore 136 for generating well logs, performing downhole tests and/or collecting samples. Wireline tool 106.3 may be used to provide another method and apparatus for performing a seismic survey operation. Wireline tool 106.3 may, for example, have an explosive, radioactive, electrical, or acoustic energy source 144 that sends and/or receives electrical signals to surrounding subterranean formations 102 and fluids therein.

Wireline tool 106.3 may be operatively connected to, for example, geophones 118 and a computer 122.1 of a seismic truck 106.1 of Figure 1A. Wireline tool 106.3 may also provide data to surface unit 134. Surface unit 134 may collect data generated during the wireline operation and may produce data output 135 that may be stored or transmitted. Wireline tool 106.3 may be positioned at various depths in the wellbore 136 to provide a survey or other information relating to the subterranean formation 102.

Sensors (S), such as gauges, may be positioned about oilfield 100 to collect data relating to various field operations as described previously. As shown, sensor S is positioned in wireline tool 106.3 to measure downhole parameters which relate to, for example porosity, permeability, fluid composition and/or other parameters of the field operation.

Figure 1D illustrates a production operation being performed by production tool 106.4 deployed from a production unit or Christmas tree 129 and into completed wellbore 136 for drawing fluid from the downhole reservoirs into surface facilities 142. The fluid flows from reservoir 104 through perforations in the casing (not shown) and into production tool 106.4 in wellbore 136 and to surface facilities 142 via gathering network 146.

Sensors (S), such as gauges, may be positioned about oilfield 100 to collect data relating to various field operations as described previously. As shown, the sensor (S) may be positioned in production tool 106.4 or associated equipment, such as Christmas tree 129, gathering network 146, surface facility 142, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figures 1B-1D illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of Figures 1A-1D are intended to provide a brief description of an example of a field usable with oilfield application frameworks. Part of, or the entirety, of oilfield 100 may be on land, water and/or sea. Also, while a single field measured at a single location is depicted, oilfield applications may be utilized with any combination of one or more oilfields, one or more processing facilities and one or more wellsites.

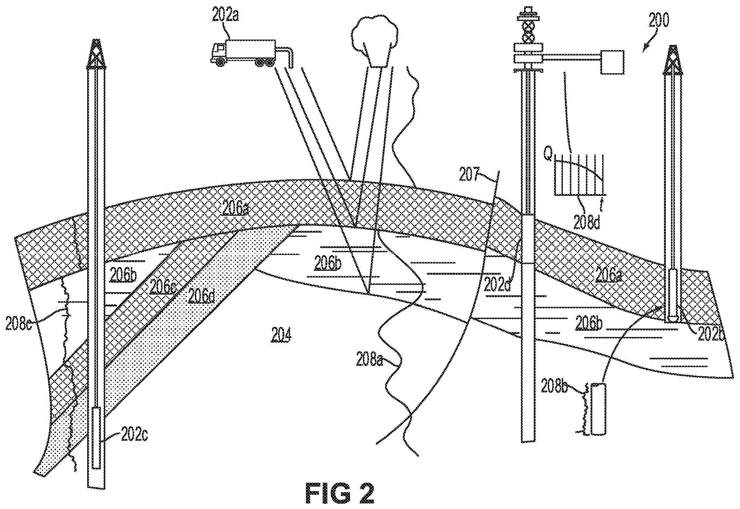

Figure 2 illustrates a schematic view, partially in cross section of oilfield 200 having data acquisition tools 202.1, 202.2, 202.3 and 202.4 positioned at various locations along oilfield 200 for collecting data of subterranean formation 204 in accordance with implementations of various technologies and techniques described herein. Data acquisition tools 202.1-202.4 may be the same as data acquisition tools 106.1-106.4 of Figures 1A-1D, respectively, or others not depicted. As shown, data acquisition tools 202.1-202.4 generate data plots or measurements 208.1-208.4, respectively. These data plots are depicted along oilfield 200 to demonstrate the data generated by the various operations.

Data plots 208.1-208.3 are examples of static data plots that may be generated by data acquisition tools 202.1-202.3, respectively; however, it should be understood that data plots 208.1-208.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208.1 is a seismic two-way response over a period of time. Static plot 208.2 is core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208.3 is a logging trace that typically provides a resistivity or other measurement of the formation at various depths.

A production decline curve or graph 208.4 is a dynamic data plot of the fluid flow rate over time. The production decline curve typically provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 204 has a plurality of geological formations 206.1-206.4. As shown, this structure has several formations or layers, including a shale layer 206.1, a carbonate layer 206.2, a shale layer 206.3 and a sand layer 206.4. A fault 207 extends through the shale layer 206.1 and the carbonate layer 206.2. The static data acquisition tools are adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of Figure 2, may then be processed and/or evaluated. Typically, seismic data displayed in static data plot 208.1 from data acquisition tool 202.1 is used by a geophysicist to determine characteristics of the subterranean formations and features. The core data shown in static plot 208.2 and/or log data from well log 208.3 are typically used by a geologist to determine various characteristics of the subterranean formation. The production data from graph 208.4 is typically used by the reservoir engineer to determine fluid flow reservoir characteristics. The data analyzed by the geologist, geophysicist and the reservoir engineer may be analyzed using modeling techniques.

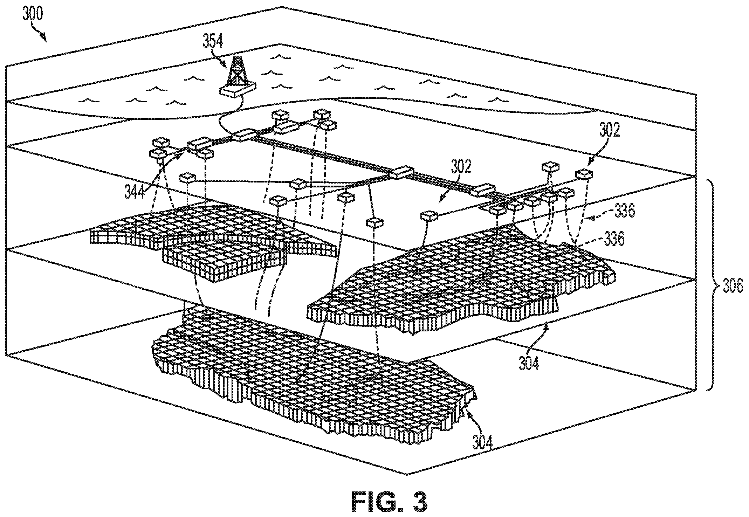

Figure 3 illustrates an oilfield 300 for performing production operations in accordance with implementations of various technologies and techniques described herein. As shown, the oilfield has a plurality of wellsites 302 operatively connected to central processing facility 354. The oilfield configuration of Figure 3A is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 302 has equipment that forms wellbore 336 into the earth. The wellbores extend through subterranean formations 306 including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to processing facility 354.

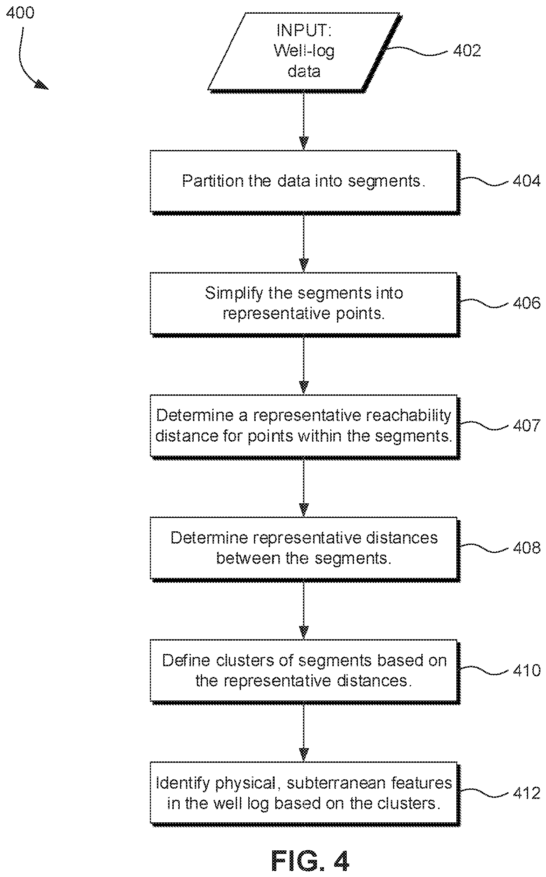

Figure 4 illustrates a flowchart of a method 400 for interpreting well log data, according to an embodiment. Although the worksteps in the method 400 are presented in an example sequence, it will be appreciated that the workflow may be adjusted by combining, separating, and/or re-ordering the worksteps, or executing at least some of the worksteps in parallel, without departing from the scope of the present disclosure.

The method 400 may begin by receiving well-log data, as at 402. May different types of well-log data are known and may be employed, such as electrical resistivity, spontaneous potential, nuclear, nuclear magnetic resonance, acoustic, dipmeter and imaging, seismic, etc. In general, the well-log data may be any data collected from one or more wells, including measurements of parameters such as gamma ray, bulk density, resistivity, neutron porosity, amplitude, travel time, signal velocity, depth, etc.

The method 400 may then proceed to partitioning the data into segments, as at 404. The segments may represent discrete depth intervals of the well in the well log. In an embodiment, the segments are partitioned by squaring the well-log data (e.g., converting the generally curves of the plot to square steps), and then noting the changes in direction of the squared data (change points). Data between consecutive change points may be considered, in some embodiments, a segment. In other embodiments, any other convenient way to partition the well-log data into segments may be employed.

The method 400 may also include simplifying the segments into representative points, as at 406. The simplification of the segments into representative points may take many forms. For example, statistical measures may be used to either select a point that is already contained within the set of points making up the segment, or by creating a new point that is statistically representative of the segment. For example, a mean or average of the segment, in a domain that uses parameters as its axes, may be employed to determine a representative point. In some embodiments, ellipsoids or other regions may be defined around the representative point, e.g., based on statistical measures (e.g., standard deviation) of the segment in the axes of the domain.

The method 400 may also, at this point, include determining a representative reachability distance for points within the segments, as at 407. Reachability distances are employed in density-based clustering algorithms, such as the "ordering points to identify the clustering structure" ("OPTICS") algorithm. In some embodiments, the reachability distance for the individual points in the respective segments may be approximated by the average reachability distance for the points in the segments, which may be approximated statistically based on the standard deviation of the position of the points.

The method 400 may then proceed to determining representative distances between the segments, as at 408. With the average reachability distance between points inside each segment approximated, the segments may be "connected" together based on a "representative" distance therebetween. For example, the method 400 may determine the representative distance as between the representative points, or as between regions identified around the representative points.

The method 400 may then include initializing clusters based on the representative distances between the segments, as at 410. Further, clusters may be combined, e.g., using a supervised or semi-supervised labeling process. In some embodiments, once the clusters are defined, the clusters may be repopulated with the individual points of the segments from the original well-log data, e.g., labeled as within the respective clusters.

The results of the method 400 may be the identification of clusters, which may represent geological structures (e.g., electrofacies) in the subterranean formation(s) through which one or more wells extend, which may be identified as at 412. Drilling, completion, and/or production processes may be altered based on the identification of the electrofacies. For example, well trajectories and/or other drilling parameters may be changed, intervention and/or treatment processes parameters may be changed. Further, the method 400 may allow identification of the clusters based on potentially several well-logs, potentially from different wells, which may allow the clusters to be identified across the dataset in a holistic manner. Further, the simplification of the data set in the method 400 may lead to efficiency gains, as runtimes may drop from $O(n^2)$ to $O(n \log n)$, which in realistically large data sets can be the difference between seconds and weeks of runtime. Additionally, the method 400 may be performed in parallel for different well logs and/or particular data types, which may further reduce runtimes and potentially increase accuracy. Thus, the present method represents an advancement in the operation of the computer itself.

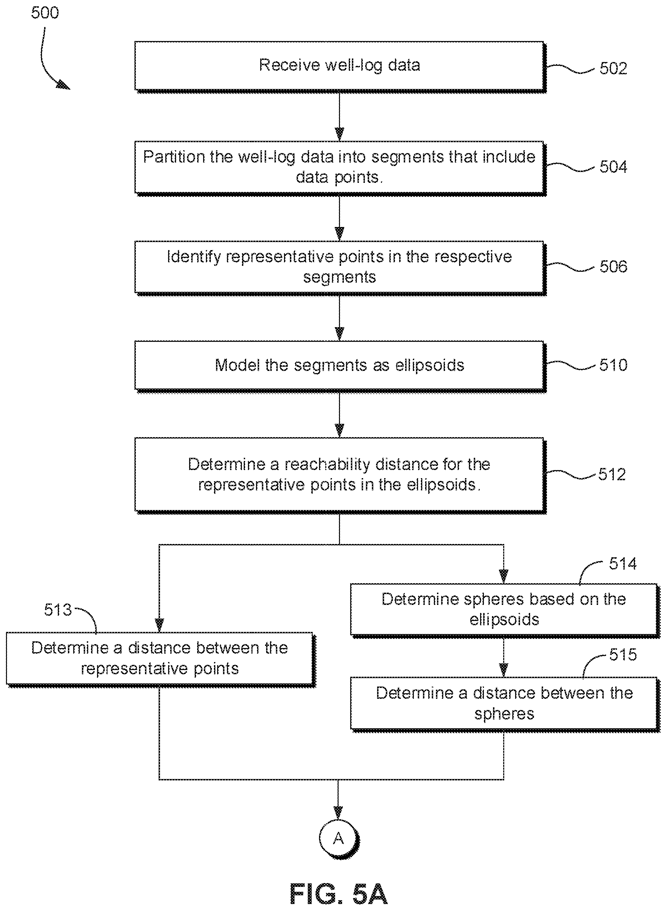

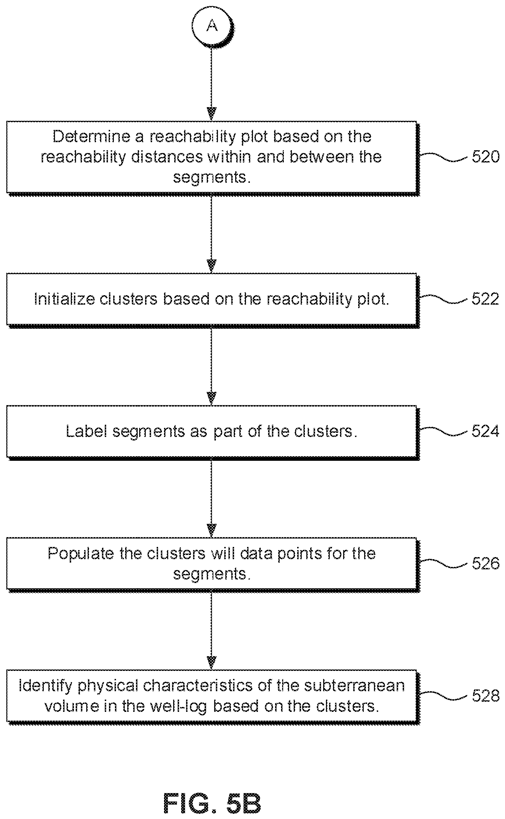

Figures 5A and 5B illustrate a flowchart of a method 500 for interpreting well log data, according to an embodiment. Although the worksteps in the method 500 are presented in an example sequence, it will be appreciated that the workflow may be adjusted by combining, separating, and/or re-ordering the worksteps, or executing at least some of the worksteps in parallel, without departing from the scope of the present disclosure.

The method 500 may begin with receiving well-log data, as at 502, and as described above. The well-log data may include data points, potentially many thousands of data points, which may tie depth to a variety of different measurements or parameters. The method 500 may then partition the well-log data into segments which may include multiple points, as at 504.

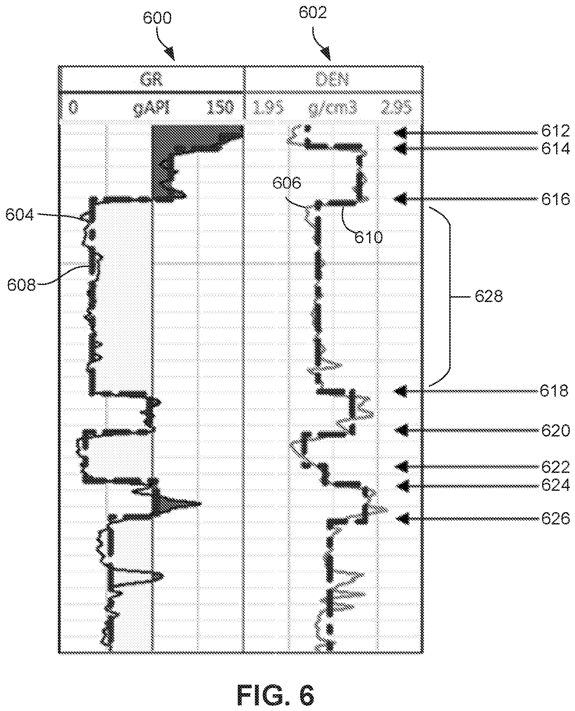

Figure 6 illustrates an example of two well logs 600, 602 representing gamma ray and bulk density measurements along a depth interval of a wellbore. The measurement plots are illustrated by the solid lines 604, 606. To partition the well-log 600, 602, the well-logs 600, 602 may be squared, as indicated by the dashed, square lines 608, 610. Change points, e.g., those labeled 612, 614, 616, 618, 620, 622, 624, 626, may be identified where the square lines 608, 610 change direction. The regions of the well logs 600, 602 between the change points 612-626 may then be labeled as separate segments, e.g., segment 628 spans between change points 616 and 618. Additional considerations, such as a minimum distance between consecutive change points, may also be employed to adapt the identification of the segments.

Returning to Figure 5A, the method may proceed to identifying representative points in the respective segments, as at 506. The representative points may be defined using a statistical metric, e.g., a mean or median. Thus, for example, referring again to Figure 6, in the segment 628, the well logs 600, 602 may define a set of gamma ray values and a set of bulk density values; the representative point for this segment may be represented as a point having the mean gamma ray value, and the mean bulk density value. As such, a parameter domain in which the axes are the well-log measurement parameters may be established, and the points (whether representative or the full set of well-log points) may be represented or at least representable in this domain using their parameter values as their coordinates.

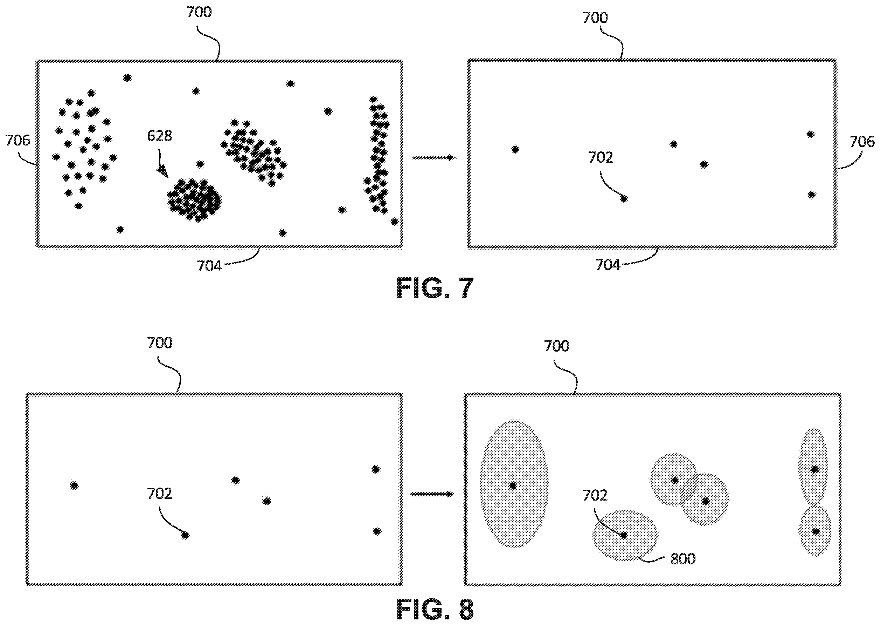

Figure 7 illustrates an example of a two-dimensional parameter domain 700 for the well-log data, first, on the left, with many of the points of the well-logs 600, 602 plotted, and second with the representative points 702 selected and the rest removed. In the domain, one axis 704 represents one parameter (e.g., gamma ray values, as plotted versus depth in the well log 600 of Figure 6), and one axis 706 represents another parameter (e.g., bulk density values, as plotted versus depth in the well log 602 of Figure 6). It will be appreciated that three or more axes domains may be analyzed using the method 500.

As shown, one representative point 702 is selected from each segment 628, resulting in a reduction in the number of points under consideration. It should be noted that the segments 628 might be identified, in general, at this point by a human user using a subjective interpretation; however, the present disclosure provides an automated approach, following certain computer-implemented rules and algorithms to perform such a task, which may at least partially avoid the tedious, subjective task, and provide a more efficient, repeatable result. Moreover, it will be appreciated that more than three dimensions (parameters) may be considered simultaneously by a computer using this method, while such an interpretation would be difficult for a user to visually conduct.

In an example, calling $s_k$ the segments obtained after applying the change point algorithm (where $k \in [\![1\,;\#\,\mathrm{cuts}]\!]$), the mean of the variable $i$ is computed by

$$m_{i,k} = \frac{1}{\#s_k} \times \sum_{p \in s_k} p_i \qquad (1)$$

As a result, a representative point $c_k$ of a segment $s_k$ is defined by

$$c_k = (m_{1,k}, m_{2,k}, ..., m_{n,k}) \qquad (2)$$

Returning to Figure 5A, the method 500 may then proceed to modeling the segments as ellipsoids in the parameter domain, as at 510. Figure 8 illustrates an example of such ellipsoids 800, which may have dimensions that are equivalent to the standard deviation of the values in the respective axes for the points in the respective segments and may be centered at the representative points 702.

This may facilitate developing an equivalent representation of the initial well-log dataset. The previous simplifications are supported by considering the blobs of points contained in each segment $s_k$ as ellipsoids. The standard deviation $\sigma_{i,k}$ of the respective segments $s_k$ in the respective dimensions $i$ is obtained by:

$$\sigma_{i,k} = \sqrt{\sum_{p \in s_k} \frac{(p_i - m_{i,k})^2}{\#s_k}} \qquad (3)$$

Therefore, the ellipsoid containing the points of a segment $s_k$ is given by:

$$\frac{x_1^2}{\sigma_{1,k}^2} + \frac{x_2^2}{\sigma_{2,k}^2} + ... + \frac{x_n^2}{\sigma_{n,k}^2} = 1 \qquad (4)$$

In dimension $n$, the volume $V_k$ of the ellipsoid representing segment $s_k$ is given by

$$V_k = \frac{2}{n} \times \frac{\pi^{\frac{n}{2}}}{\Gamma(\frac{n}{2})} \times \prod_{i=1}^{n} \sigma_{i,k} \tag{5}$$

where the $\Gamma$ function represents the mathematical gamma function, extension of the factorial function to real numbers.

A reachability distance for the points in the ellipsoids (individual segment approximations) may then be determined, as at 512. Rather than determining each, individual reachability distance for each point in the well log(s), however, a statistical method may be employed, by analogy to statistical physics, to find an average reachability distance for points in the segments. The average distance between two particles $d_{2\,part}$ inside the $n$-dimensional volume $V$ containing $N$ particles is given by

$$d_{2\,part} = \left(\frac{V}{N}\right)^{\frac{1}{n}} \tag{6}$$

The value of "minpts", which is the smallest number of points within a given radius that are used to define a neighborhood of points in an OPTICS analysis, is also considered. Thus, for points x of the data set that are inside clusters, the following approximation can be made:

$$RD|x| \cong Distance\ (x, minpts'ths\ neighbor\ of\ x) \tag{7}$$

The average reachability distance of points $\langle RD \rangle_k$ inside a segment $s_k$ may be defined as:

$$\langle RD \rangle_k = r \mid V\left(\sigma_{i,k} = r, d_{2\,part} = d_{2\,part}V(k), N = minpts\right) \tag{8}$$

or in other terms:

$$\langle RD \rangle_k = \left(\frac{minpts}{\#s_k} \times \prod_{i=1}^{n} \sigma_{i,k}\right)^{\frac{1}{n}} \tag{9}$$

If the number of segments is high enough, the average reachability distance in a segment may be approximated by the reachability distance of the representative point $c_k$.

$$\langle RD \rangle_k = RD[c_k] \tag{10}$$

Next, the method 500 may proceed to calculating the distances between the representative points. This may be done simplistically, by simply computing the distance in the parameter domain between the representative points, as at 513, as follows:

$$d(s_j, s_k) = \|c_j - c_k\| \tag{11}$$

In another embodiment, this may be done using a spherical approach, e.g., as at 514, by considering a sphere that represents the ellipsoid defined at 510. The spherical approach may either draw a sphere that contains the ellipsoid (e.g., the smallest sphere able, termed the "max-spherical approach") or a sphere that is contained within the ellipsoid (e.g., the largest sphere contained within the ellipsoid, termed the "min-spherical approach"). The shortest distance between spheres may then be determined at 515, as follows:

The max-spherical approach:

$$d(s_j, s_k) = \max\left(\|c_j - c_k\| - \max_{i \in [\![1:n]\!]} \sigma_{i,j} - \max_{i \in [\![1:n]\!]} \sigma_{i,k}, \quad 0\right) \tag{12}$$

The min-spherical approach:

$$d(s_j, s_k) = \max\left(\|c_j - c_k\| - \min_{i \in [\![1;n]\!]} \sigma_{i,j} - \min_{i \in [\![1;n]\!]} \sigma_{i,k}, \quad 0\right) \tag{13}$$

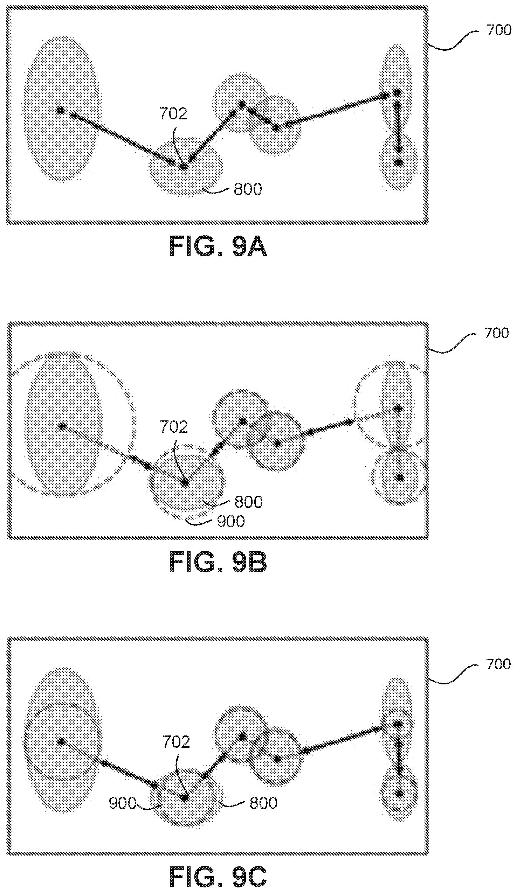

Figure 9A illustrates the simplistic approach, Figure 9B illustrates the min-spherical approach, and Figure 9C illustrates the max-spherical approach, according to an embodiment.

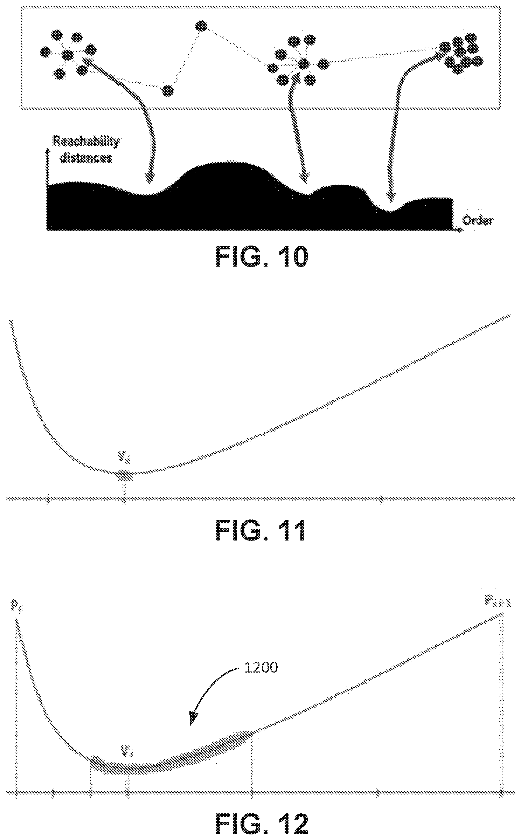

Returning to Figure 5B, the method 500 may proceed to determining a reachability plot, as at 520. Figure 10 illustrates an example of a reachability plot 1000. In this context, a reachability plot is a type of dendrogram, in which the points are ordered such that nearest neighbors in the domain are are next to one another, with the reachability distances being in the vertical axis. In the present method 500, the average reachability is used for the segments, and the reachability between segments being defined using the representative distance.

The method 500 may then proceed to initializing clusters, as at 522. The clusters may be initialized using the reachability plot determined at 520. In one example, the clusters may be initialized at local minima in the reachability plot, that is, at points of inflection between two local maxima. Figure 11 illustrates this, where Vi is the local minimum, the representative point located at this position on the plot thus serves as a cluster initialization point. In another embodiment, a plurality of points within a given range of the local minimum can be set as cluster initialization points. Figure 12 illustrates this, where the cluster initialization points are on an interval 1200 defined as:

$$\left[\frac{w_1 \times \mathrm{P}_i + w_2 \times \mathrm{V}_i}{w_1 + w_2}; \frac{w_1 \times \mathrm{P}_{i+1} + w_2 \times \mathrm{V}_i}{w_1 + w_2}\right] \tag{14}$$

where $w_1$ and $w_2$ may be predetermined or user-defined (e.g., in Figure 12, $w_1 = 1$ and $w_2 = 2$)

Once the clusters are initialized, any suitable clustering technique may be employed to determine the segments that are part of the clusters, as at 524. For example, a semi-supervised clustering technique such as label spreading may be employed to propagate the clusters. Once the clustering is complete, the clusters may be populated with the well-log points based on the correspondence of the segments to the well-log points, as at 526, and the clusters may then be employed to identify physical characteristics in the subterranean formation that the well log(s) represents, as at 528.

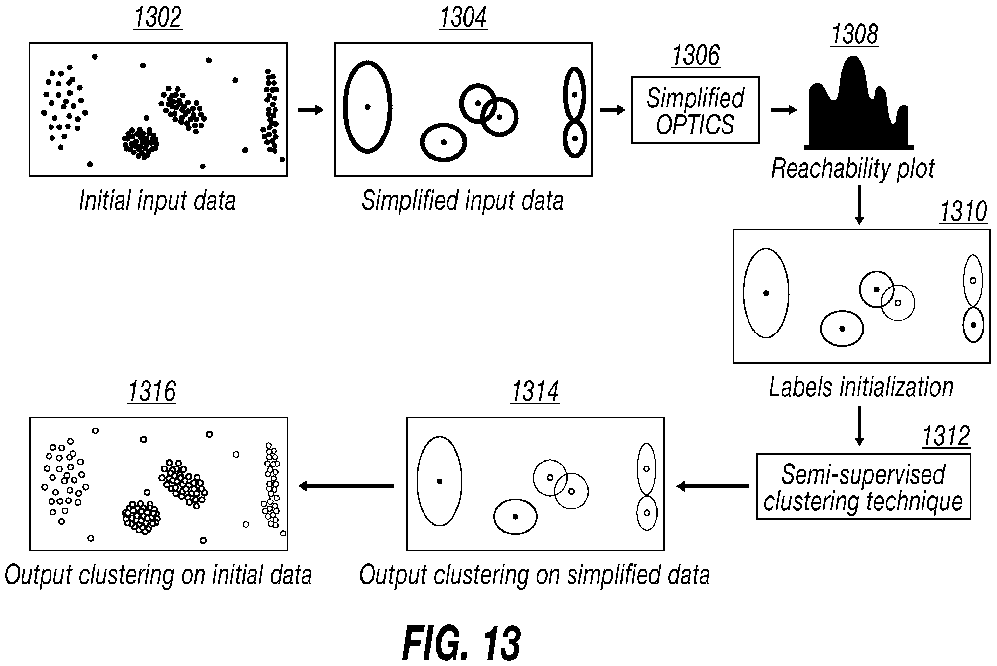

Figure 13 illustrates a conceptual diagram of at least a portion of the method 500, according to an embodiment. As at 1302, the well-log data with data points in the parameter domain are determined. Representative points are determined therefrom, and the segments are modeled as ellipsoids, as at 1304. Next, the OPTICS (or any other suitable clustering algorithm) may be executed using the simplified data, resulting in a reachability plot at 1306, from which clusters are initialized at 1306. The clusters are propagated, e.g., using a semi-supervised clustering technique, as at 1308, and labeled clusters of the modeled segments are provided at 1310. The initial data points are then populated back into the corresponding segments, clustered according to the clusters in which the segments are contained, as at 1312.

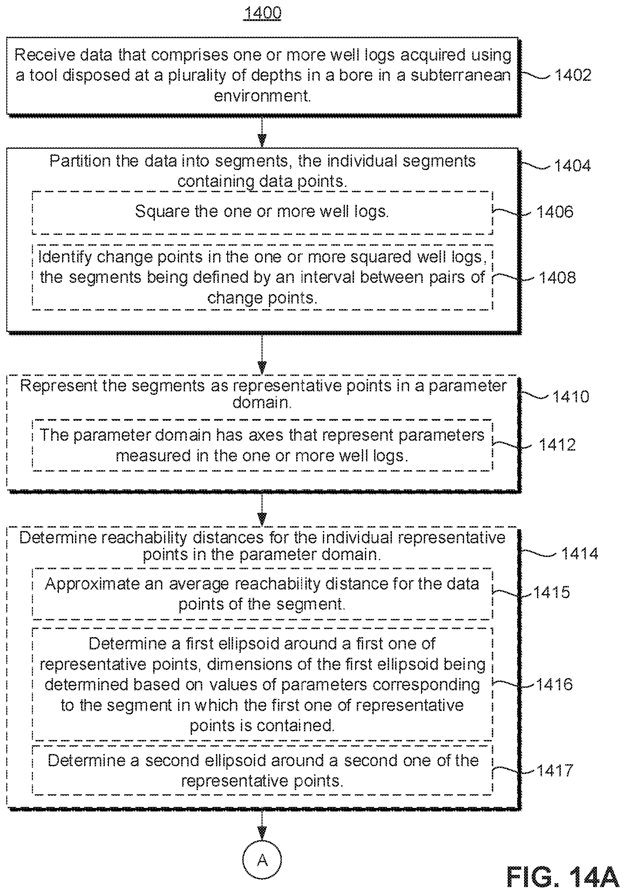

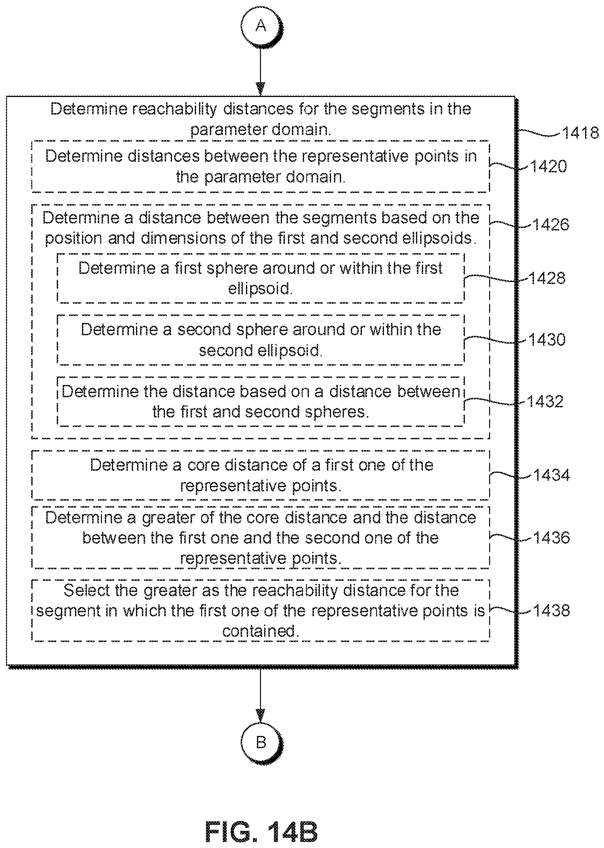

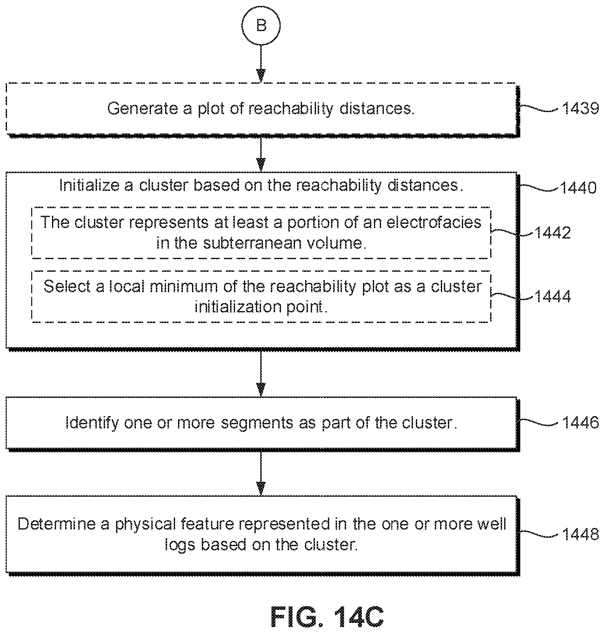

Figure 14 illustrates a flowchart of a method 1400, according to an embodiment. Although the worksteps in the method 1400 are presented in an example sequence, it will be appreciated that the workflow may be adjusted by combining, separating, and/or re-ordering the worksteps, or executing at least some of the worksteps in parallel, without departing from the scope of the present disclosure.

The method 1400 includes receiving data that comprises one or more well logs acquired using a tool disposed at a plurality of depths in a bore in a subterranean environment, as at 1402 (e.g., Figure 5A, 502). The method 1400 also includes partitioning the data into segments, the individual segments containing data points, as at 1404 (e.g., Figure 5A, 504). In an embodiment, partitioning at 1404 includes squaring the one or more well logs, as at 1406 (e.g., an example of partitioning illustrated in Figure 5A, 504). Further, in such an embodiment, partitioning at 1404 includes identifying change points in the one or more squared well logs, the segments being defined by an interval between pairs of change points, as at 1408.

The method 1400 also includes representing the segments as representative points in a parameter domain, as at 1410 (e.g., Figure 5A, 506; Figure 7, 700, 702). In an embodiment, the parameter domain has axes that represent parameters measured in the one or more well logs, as at 1412 (Figure 7, 700).

The method 1400 may further include determining reachability distances for the representative points in the parameter domain, as at 1414 (e.g., Figure 5A, 512). In an embodiment, determining reachability distances may include approximating an average reachability distance for the data points of the segment, as at 1415 (e.g., Figure 5A, 512). Determining at 1414 may include determining a first ellipsoid around a first one of representative points, dimensions of the first ellipsoid being determined based on values of parameters corresponding to the segment in which the first one of representative points is contained, as at 1416 (e.g., Figure 5A, 510). Determining at 1418 may also include determining a second ellipsoid around a second one of the representative point, as at 1417 (e.g., Figure 5A, 510).

The method 1400 may further include determining reachability distances for the segments in the parameter domain, as at 1418 (e.g., Figure 4, 408). This may include determining distances between the representative points in the parameter domain, as at 1420 (e.g., Figure 5A, 513). Determining at 1418 may also include determining a distance between the segments based on the position and dimensions of the first and second ellipsoids, as at 1426 (e.g., Figure 5A, 515). Determining at 1426 may include determining a first sphere around or within the first ellipsoid, as at 1428. Determining at 1426 may further include determining a second sphere around or within the second ellipsoid, as at 1430 (e.g., Figure 5A, 514). Determining at 1426 may further include determining the distance based on a distance between the first and second spheres, as at 1432 (e.g., Figure 5A, 515).

Determining at 1418 may also include determining a core distance of a first one of the representative points, as at 1434. Determining at 1420 may further include determining a greater of the core distance and the distance between the first one and the second one of the representative points, as at 1436. Determining at 1418 may further include selecting the greater as the reachability distance for the segment containing the first one of the representative points, as at 1438.

The method 1400 may also include generating a plot of reachability distances, as at 1439 (e.g., Figure 5B, 520). The method 1400 also includes initializing a cluster based on the reachability distances, as at 1440 (e.g., Figure 5B, 522). The clusters may represent at least a portion of an electrofacies in the subterranean volume, as at 1442. Initializing the cluster may also include selecting a local minimum of the reachability plot as a cluster initialization point, as at 1444 (e.g., Figure 11).

The method 1400 includes identifying one or more segments as part of the cluster, as at 1446 (e.g., Figure 5B, 524). The method 1400 also include identifying a physical feature represented in the one or more well logs based on the cluster, as at 1448 (e.g., Figure 5B, 528).

In one or more embodiments, the functions described can be implemented in hardware, software, firmware, or any combination thereof. For a software implementation, the techniques described herein can be implemented with modules (*e.g.*, procedures, functions, subprograms, programs, routines, subroutines, modules, software packages, classes, and so on) that perform the functions described herein. A module can be coupled to another module or a hardware circuit by passing and/or receiving information, data, arguments, parameters, or memory contents. Information, arguments, parameters, data, or the like can be passed, forwarded, or transmitted using any suitable means including memory sharing, message passing, token passing, network transmission, and the like. The software codes can be stored in memory units and executed by processors. The memory unit can be implemented within the processor or external to the processor, in which case it can be communicatively coupled to the processor via various means as is known in the art.

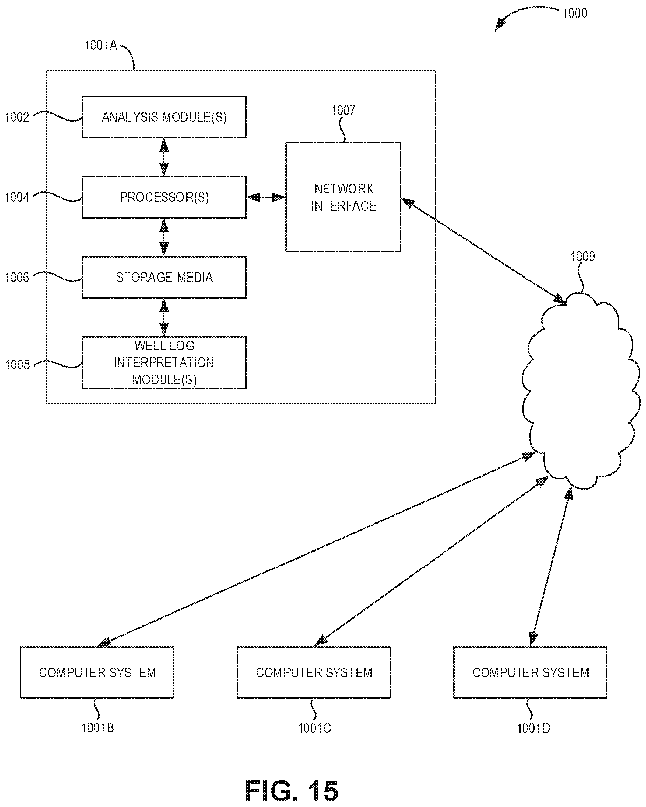

In some embodiments, any of the methods of the present disclosure may be executed by a computing system. Figure 15 illustrates an example of such a computing system 1500, in accordance with some embodiments. The computing system 1500 may include a computer or computer system 1501A, which may be an individual computer system 1501A or an arrangement of distributed computer systems. The computer system 1501A includes one or more analysis module(s) 1502 configured to perform various tasks according to some embodiments, such as one or more methods disclosed herein. To perform these various tasks, the analysis module 1502 executes independently, or in coordination with, one or more processors 1504, which is (or are) connected to one or more storage media 1506. The processor(s) 1504 is (or are) also connected to a network interface 1507 to allow the computer system 1501A to communicate over a data network 1509 with one or more additional computer systems and/or computing systems, such as 1501B, 1501C, and/or 1501D (note that computer systems 1501B, 1501C and/or 1501D may or may not share the same architecture as computer system 1501A, and may be located in different physical locations, e.g., computer systems 1501A and 1501B may be located in a processing facility, while in communication with one or more computer systems such as 1501C and/or 1501D that are located in one or more data centers, and/or located in varying countries on different continents).

A processor can include a microprocessor, microcontroller, processor module or subsystem, programmable integrated circuit, programmable gate array, or another control or computing device.

The storage media 1506 can be implemented as one or more computer-readable or machine-readable storage media. Note that while in the example embodiment of Figure 15 storage media 1506 is depicted as within computer system 1501A, in some embodiments, storage media 1506 may be distributed within and/or across multiple internal and/or external enclosures of computing system 1501A and/or additional computing systems. Storage media 1506 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY® disks, or other types of optical storage, or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In some embodiments, computing system 1500 contains one or more well-log interpretation module(s) 1508. In the example of computing system 1500, computer system 1501A includes the well-log interpretation module 1508. In some embodiments, a single well-log interpretation module may be used to perform some or all aspects of one or more embodiments of the methods. In alternate embodiments, a plurality of well-log interpretation modules may be used to perform some or all aspects of methods.

It should be appreciated that computing system 1500 is only one example of a computing system, and that computing system 1500 may have more or fewer components than shown, may combine additional components not depicted in the example embodiment of Figure 15, and/or computing system 1500 may have a different configuration or arrangement of the components depicted in Figure 15. The various components shown in Figure 15 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are all included within the scope of protection of the invention.

Geologic interpretations, models and/or other interpretation aids may be refined in an iterative fashion; this concept is applicable to embodiments of the present methods discussed herein. This can include use of feedback loops executed on an algorithmic basis, such as at a computing device (e.g., computing system 1500, Figure 15), and/or through manual control by a user who may make determinations regarding whether a given step, action, template, model, or set of curves has become sufficiently accurate for the evaluation of the subsurface three-dimensional geologic formation under consideration.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods are illustrated and described may be re-arranged, and/or two or more elements may occur simultaneously. The embodiments were chosen and described in order to best explain the principals of the invention and its practical applications, to thereby enable others skilled in the art to best utilize the invention and various embodiments with various modifications as are suited to the particular use contemplated.

**Claims**

1. A method (400, 500, 1400) of interpreting well log data, comprising:

   receiving (402, 502, 1402) data that comprises one or more well logs acquired using a tool (106.2) disposed at a plurality of depths in a wellbore (336) in a subterranean environment (102), the data of each well log comprising measurements relating to a parameter of the wellbore (336);
   for each well-log measurement parameter, partitioning (404, 504, 1404) the data into segments representing discrete depth intervals of the wellbore, wherein the individual segments contain a plurality of data points associated with the well-log measurement parameter;
   determining (406, 506, 1410) a data point for each segment that is statistically representative of the data points in the segment;
   establishing a parameter domain having axes representing the well-log measurement parameters, and representing the determined representative point for each segment in this parameter domain using its parameter values as its coordinates;
   determining (407, 408, 512, 1414) reachability distances for the representative points of each segment in the parameter domain;
   initializing (410, 522) a cluster based on the reachability distances;
   identifying (410, 524) one or more segments as part of the cluster; and
   determining (412, 528) a physical feature represented in the one or more well logs based on the cluster.

2. The method of claim 1, wherein partitioning the data into segments comprises:

   squaring (1406) the one or more well logs, wherein the squaring comprises converting the well log data of the one or more well logs into square steps when plotting the well log data; and
   identifying (1408) change points in the one or more squared well logs, wherein the segments are defined by an interval between pairs of change points.

3. The method of claim 1, wherein determining (1414) the reachability distances for the representative points of each segment in the parameter domain comprises calculating or approximating (1415) an average reachability distance for the data points of the segment.

4. The method of claim 3, wherein determining (1418) the reachability distances for the representative points of each segment in the parameter domain further comprises determining (1420) distances between the representative points in the parameter domain.

5. The method of claim 4, further comprising generating (1439) a reachability plot based on the reachability distances, wherein initializing (1440) the cluster comprises selecting (1444) a local minimum of the reachability plot as a cluster initialization point.

6. The method of claim 1, wherein determining the reachability distances comprises:

   determining (1416) a first ellipsoid around a first one of representative points, wherein dimensions of the first ellipsoid are determined based on values of parameters corresponding to the segment in which the first one of representative points is contained;
   determining (1417) a second ellipsoid around a second one of the representative points; and
   determining (1426) a distance between the segments based on a position and dimensions of the first and second ellipsoids.

7. The method of claim 6, wherein determining (1426) the distance between the segments comprises:

   determining (1428) a first sphere around or within the first ellipsoid;
   determining (1430) a second sphere around or within the second ellipsoid; and
   determining (1432) the distance based on a distance between the first and second spheres.

8. The method of claim 6, wherein determining (1418) the reachability distances comprises:

   determining (1434) a core distance of a first one of representative points;
   determining (1436) a greater of the core distance and the distance between the first and second representative points; and
   selecting (1438) the greater as a reachability distance between the segments.

9. The method of claim 1, wherein the cluster represents an electrofacies in the subterranean environment (1442).

10. A computer system (1500), comprising:

   one or more processors (1504); and
   a memory system comprising one or more non-transitory computer-readable media (1506) storing instructions that, when executed by at least one of the one or more processors (1504), cause the computer system (1500) to perform the steps of the method of any preceding claim..

11. A non-transitory computer-readable medium (1506) storing instructions that, when executed by at least one processor (1504) of a computer system (1500), cause the computer system (1500) to perform the method of any of claims 1 to 9.

**Patentansprüche**

1. Verfahren (400, 500, 1400) zur Interpretation von Bohrprofildaten, umfassend:

   Empfangen (402, 502, 1402) von Daten, die ein oder mehrere Bohrprofile umfassen, die unter Verwendung eines Werkzeugs (106.2) erfasst wurden, das in einer Vielzahl von Tiefen in einer Bohrung (336) in einer unterirdischen Umgebung (102) angeordnet ist, wobei die Daten jedes Bohrprofils Messungen umfassen, die sich auf einen Parameter der Bohrung (336) beziehen;
   für jeden Bohrprofilmessparameter, Aufteilen (404, 504, 1404) der Daten in Segmente, die diskrete Tiefenintervalle der Bohrung darstellen, wobei die einzelnen Segmente eine Vielzahl von Datenpunkten enthalten, die mit dem Bohrprofilmessparameter assoziiert sind;

Bestimmen (406, 506, 1410) eines Datenpunkts für jedes Segment, der statistisch repräsentativ für die Datenpunkte in dem Segment ist;

Erstellen einer Parameterdomäne mit Achsen, die die Bohrprofilmessparameter darstellen, und Darstellen des bestimmten repräsentativen Punkts für jedes Segment in dieser Parameterdomäne unter Verwendung seiner Parameterwerte als seine Koordinaten;

Bestimmen (407, 408, 512, 1414) von Erreichbarkeitsabständen für die repräsentativen Punkte jedes Segments in der Parameterdomäne;

Initialisieren (410, 522) eines Clusters basierend auf den Erreichbarkeitsabständen;

Identifizieren (410, 524) eines oder mehrerer Segmente als Teil des Clusters; und

Bestimmen (412,528) eines physikalischen Merkmals, das in dem einen oder den mehreren Bohrprofilen dargestellt ist, basierend auf dem Cluster.

2. Verfahren nach Anspruch 1, wobei das Aufteilen der Daten in Segmente umfasst:

Quadrieren (1406) des einen oder der mehreren Bohrprofile, wobei das Quadrieren das Umwandeln der Bohrprofile der einen oder mehreren Bohrprofile in quadratische Stufen beim Darstellen der Bohrprofildaten umfasst; und

Identifizieren (1408) von Änderungspunkten in dem einen oder den mehreren quadrierten Bohrprofilen, wobei die Segmente durch ein Intervall zwischen Paaren von Änderungspunkten definiert sind.

3. Verfahren nach Anspruch 1, wobei das Bestimmen (1414) der Erreichbarkeitsabstände für die repräsentativen Punkte jedes Segments in der Parameterdomäne das Berechnen oder Approximieren (1415) eines durchschnittlichen Erreichbarkeitsabstands für die Datenpunkte des Segments umfasst.

4. Verfahren nach Anspruch 3, wobei das Bestimmen (1418) der Erreichbarkeitsabstände für die repräsentativen Punkte jedes Segments in der Parameterdomäne ferner das Bestimmen (1420) von Abständen zwischen den repräsentativen Punkten in der Parameterdomäne umfasst.

5. Verfahren nach Anspruch 4, ferner umfassend das Erzeugen (1439) eines Erreichbarkeitsdiagramms basierend auf den Erreichbarkeitsabständen, wobei das Initialisieren (1440) des Clusters das Auswählen (1444) eines lokalen Minimums des Erreichbarkeitsdiagramms als Cluster-Initialisierungspunkt umfasst.

6. Verfahren nach Anspruch 1, wobei das Bestimmen der Erreichbarkeitsabstände umfasst:

Bestimmen (1416) eines ersten Ellipsoids um einen ersten der repräsentativen Punkte, wobei Abmessungen des ersten Ellipsoids basierend auf Werten von Parametern bestimmt werden, die dem Segment entsprechen, in dem der erste der repräsentativen Punkte enthalten ist;

Bestimmen (1417) eines zweiten Ellipsoids um einen zweiten der repräsentativen Punkte; und

Bestimmen (1426) eines Abstands zwischen den Segmenten basierend auf einer Position und Abmessungen des ersten und des zweiten Ellipsoids.

7. Verfahren nach Anspruch 6, wobei das Bestimmen (1426) der Entfernung zwischen den Segmenten umfasst:

Bestimmen (1428) einer ersten Kugel um oder innerhalb des ersten Ellipsoids;

Bestimmen (1430) einer zweiten Kugel um oder innerhalb des zweiten Ellipsoids; und

Bestimmen (1432) des Abstands basierend auf einem Abstand zwischen der ersten und der zweiten Kugel.

8. Verfahren nach Anspruch 6, wobei das Bestimmen (1418) die Erreichbarkeitsabstände umfasst:

Bestimmen (1434) eines Kernabstands eines ersten der repräsentativen Punkte;

Bestimmen (1436) einer größeren des Kernabstands und des Abstands zwischen dem ersten und dem zweiten repräsentativen Punkt; und

Auswählen (1438) des größeren als einen Erreichbarkeitsabstand zwischen den Segmenten.

9. Verfahren nach Anspruch 1, wobei der Cluster eine Elektrofazies in der unterirdischen Umgebung (1442) darstellt.

10. Computersystem (1500), umfassend:

einen oder mehrere Prozessoren (1504); und

ein Speichersystem (1506), das ein oder mehrere nicht-transitorische, computerlesbare Medien umfasst, die Anweisungen speichern, die, wenn sie durch mindestens einen des einen oder der mehreren Prozessoren (1504) ausgeführt werden, das Computersystem (1500) veranlassen, die Schritte des Verfahrens nach einem der vorstehenden Ansprüche durchzuführen.

11. Nicht-transitorisches, computerlesbares Medium (1506), das Anweisungen speichert, die, wenn sie durch mindestens einen Prozessor (1504) eines Computersystems (1500) ausgeführt werden, das Computersystem (1500) veranlassen, das Verfahren nach einem der Ansprüche 1 bis 9 durchzuführen.

## Revendications

1. Procédé (400, 500, 1400) d'interprétation de données de diagraphie de puits, comprenant :

la réception (402, 502, 1402) de données comprenant une ou plusieurs diagraphies de puits acquises à l'aide d'un outil (106.2) disposé à une pluralité de profondeurs dans un puits de forage (336) dans un environnement souterrain (102), les données de chaque diagraphie de puits comprenant des mesures relatives à un paramètre du puits de forage (336) ;

pour chaque paramètre de mesure de diagraphie de puits, le partitionnement (404, 504, 1404) des données en segments représentant des intervalles de profondeur discrets du puits de forage, dans lequel les segments individuels contiennent une pluralité de points de données associés au paramètre de mesure de diagraphie de puits ;

la détermination (406, 506, 1410) d'un point de données pour chaque segment qui est statistiquement représentatif des points de données dans le segment ;

l'établissement d'un domaine de paramètres ayant des axes représentant les paramètres de mesure de diagraphie de puits, et la représentation du point représentatif déterminé pour chaque segment dans ce domaine de paramètres à l'aide de ses valeurs de paramètres comme ses coordonnées ;

la détermination (407, 408, 512, 1414) de distances d'accessibilité pour les points représentatifs de chaque segment dans le domaine de paramètres ;

l'initialisation (410, 522) d'une grappe sur la base des distances d'accessibilité ;

l'identification (410, 524) d'un ou plusieurs segments comme faisant partie de la grappe ; et

la détermination (412, 528) d'une caractéristique physique représentée dans la ou les diagraphies de puits sur la base de la grappe.

2. Procédé selon la revendication 1, dans lequel le partitionnement des données en segments comprend :

la mise au carré (1406) de la ou des diagraphies de puits, dans lequel la mise au carré comprend la conversion des données de diagraphie de puits de la ou des diagraphies de puits en échelons carrés lors du tracé des données de diagraphie de puits ; et

l'identification (1408) de points de changement dans la ou les diagraphies de puits mises au carré, dans lequel les segments sont définis par un intervalle entre des paires de points de changement.

3. Procédé selon la revendication 1, dans lequel la détermination (1414) des distances d'accessibilité pour les points représentatifs de chaque segment dans le domaine de paramètres comprend le calcul ou l'approximation (1415) d'une distance d'accessibilité moyenne pour les points de données du segment.

4. Procédé selon la revendication 3, dans lequel la détermination (1418) des distances d'accessibilité pour les points représentatifs de chaque segment dans le domaine de paramètres comprend en outre la détermination (1420) de distances entre les points représentatifs dans le domaine de paramètres.

5. Procédé selon la revendication 4, comprenant en outre la génération (1439) d'un tracé d'accessibilité sur la base des distances d'accessibilité, dans lequel l'initialisation (1440) de la grappe comprend la sélection (1444) d'un minimum local du tracé d'accessibilité en tant que point d'initialisation de grappe.

6. Procédé selon la revendication 1, dans lequel la détermination des distances d'accessibilité comprend :

la détermination (1416) d'un premier ellipsoïde autour d'un premier point des points représentatifs, dans lequel les dimensions du premier ellipsoïde sont déterminées sur la base de valeurs de paramètres correspondant au segment dans lequel le premier point des points représentatifs est contenu ;
la détermination (1417) d'un second ellipsoïde autour d'un second point des points représentatifs ; et
la détermination (1426) d'une distance entre les segments sur la base d'une position et de dimensions des premier et second ellipsoïdes.

7. Procédé selon la revendication 6, dans lequel la détermination (1426) de la distance entre les segments comprend :

la détermination (1428) d'une première sphère autour ou à l'intérieur du premier ellipsoïde ;
la détermination (1430) d'une seconde sphère autour ou à l'intérieur du second ellipsoïde ; et
la détermination (1432) de la distance sur la base d'une distance entre les première et seconde sphères.

8. Procédé selon la revendication 6, dans lequel la détermination (1418) des distances d'accessibilité comprend :

la détermination (1434) d'une distance de cœur d'un premier point des points représentatifs ;
la détermination (1436) d'une plus grande valeur parmi la distance au cœur et la distance entre les premier et second points représentatifs ; et
la sélection (1438) de la plus grande en tant que distance d'accessibilité entre les segments.

9. Procédé selon la revendication 1, dans lequel la grappe représente un électrofaciès dans l'environnement souterrain (1442).

10. Système informatique (1500), comprenant :

un ou plusieurs processeurs (1504) ; et
un système de mémoire comportant un ou plusieurs supports non transitoires lisibles par ordinateur (1506) stockant des instructions qui, lorsqu'elles sont exécutées par au moins l'un du ou des processeurs (1504), amènent le système informatique (1500) à réaliser les étapes du procédé selon l'une quelconque revendication précédente.

11. Support non transitoire lisible par ordinateur (1506) stockant des instructions qui, lorsqu'elles sont exécutées par au moins un processeur (1504) d'un système informatique (1500), amènent le système informatique (1500) à réaliser le procédé selon l'une quelconque des revendications 1 à 9.

FIG. 1A

FIG. 1B

FIG. 1C

FIG. 1D

FIG 2

FIG. 3

400

INPUT:
Well-log
data
— 402

Partition the data into segments.
— 404

Simplify the segments into
representative points.
— 406

Determine a representative reachability
distance for points within the segments.
— 407

Determine representative distances
between the segments.
— 408

Define clusters of segments based on
the representative distances.
— 410

Identify physical, subterranean features
in the well log based on the clusters.
— 412

FIG. 4

500

Receive well-log data — 502

Partition the well-log data into segments that include data points. — 504

Identify representative points in the respective segments — 506

Model the segments as ellipsoids — 510

Determine a reachability distance for the representative points in the ellipsoids. — 512

514

Determine spheres based on the ellipsoids

513 —

Determine a distance between the representative points

515

Determine a distance between the spheres

A

FIG. 5A

A

Determine a reachability plot based on the reachability distances within and between the segments. — 520

Initialize clusters based on the reachability plot. — 522

Label segments as part of the clusters. — 524

Populate the clusters will data points for the segments. — 526

Identify physical characteristics of the subterranean volume in the well-log based on the clusters. — 528

FIG. 5B

FIG. 6

**FIG. 7**

**FIG. 8**

FIG. 9A

FIG. 9B

FIG. 9C

24

**FIG. 10**

**FIG. 11**

**FIG. 12**

**FIG. 13**

EP 3 631 158 B1

1400

Receive data that comprises one or more well logs acquired using a tool disposed at a plurality of depths in a bore in a subterranean environment. — 1402

Partition the data into segments, the individual segments containing data points. — 1404

Square the one or more well logs. — 1406

Identify change points in the one or more squared well logs, the segments being defined by an interval between pairs of change points. — 1408

Represent the segments as representative points in a parameter domain. — 1410

The parameter domain has axes that represent parameters measured in the one or more well logs. — 1412

Determine reachability distances for the individual representative points in the parameter domain. — 1414

Approximate an average reachability distance for the data points of the segment. — 1415

Determine a first ellipsoid around a first one of representative points, dimensions of the first ellipsoid being determined based on values of parameters corresponding to the segment in which the first one of representative points is contained. — 1416

Determine a second ellipsoid around a second one of the representative points. — 1417

( A )

FIG. 14A

A

Determine reachability distances for the segments in the parameter domain. —1418

Determine distances between the representative points in the parameter domain. —1420

Determine a distance between the segments based on the position and dimensions of the first and second ellipsoids. —1426

Determine a first sphere around or within the first ellipsoid. —1428

Determine a second sphere around or within the second ellipsoid. —1430

Determine the distance based on a distance between the first and second spheres. —1432

Determine a core distance of a first one of the representative points. —1434

Determine a greater of the core distance and the distance between the first one and the second one of the representative points. —1436

Select the greater as the reachability distance for the segment in which the first one of the representative points is contained. —1438

B

FIG. 14B

$$ B $$

Generate a plot of reachability distances.  ⟋1439

Initialize a cluster based on the reachability distances.  ⟋1440

The cluster represents at least a portion of an electrofacies in the subterranean volume.  ⟋1442

Select a local minimum of the reachability plot as a cluster initialization point.  ⟋1444

Identify one or more segments as part of the cluster.  ⟋1446

Determine a physical feature represented in the one or more well logs based on the cluster.  ⟋1448

FIG. 14C

**FIG. 15**

**EP 3 631 158 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008162098 A